# EUROPEAN PATENT SPECIFICATION

(11) **EP 1 510 622 B1**
(45) Date of publication and mention of the grant of the patent: **24.06.2009**
(21) Application number: 04077303.8
(22) Date of filing: 13.08.2004
(51) Int. Cl.: D06N 7/00, A47G 27/04, B32B 27/10, B32B 5/18

(54) **Carpet underlay and method for laying floor covering using the same**
Teppichunterlage und Verfahren zum Verlegen eines Bodenbelags mit dieser Unterlage
Thibaude pour moquette et procede pour poser un revetement de sol utilisant cette thibaude

(30) Priority: 26.08.2003 NL 1024163
(43) Date of publication of application: 02.03.2005
(73) Proprietor: ESTILLON B.V., NL-6604 LC Wijchen (NL)
(72) Inventor: Bosveld, Richard Patrick, 5406 NL Uden (NL); van Bree, Josephus Henricus Martinus, 5221 PC 's-Hertogenbosch (NL)
(74) Representative: Valkonet, Rutger

(56) References cited:
- WO-A-94/04016
- GB-A- 2 152 875
- GB-A- 2 206 079
- GB-A- 2 299 293
- US-A- 4 557 774
- US-A- 4 647 484

## Description

The present invention relates to a carpet underlay according to claim 1 for use in the laying of a floor covering, which underlay consists of a core comprising a nonslip layer at the bottom side and an upper layer being substantially impermeable to glue at the upper side. In addition to that, the present invention relates to a method of laying a floor covering by first laying a carpet underlay on the floor, with the nonslip layer facing towards the floor, and applying a layer of glue to the upper layer being substantially impermeable to glue of the underlay, on which the upper carpet is laid.

From European patent No. 0 667 749 to the present applicant there is known a floor covering system comprising a carpet underlay and an upper carpet to be laid on said underlay, said underlay consisting of a core with a nonslip layer, being a layer of glue, present on the bottom side thereof. A membrane is present on the upper side, thus forming an upper layer that is substantially impermeable to glue.

Although said floor covering system has been successfully used for many years, it has now appeared to be possible to improve said floor covering system by forming the upper layer of a readily obtainable, cheaper material and making the core of the carpet underlay more flexible. Extensive research has led to a carpet underlay according to the present invention, which is characterized in that the core is made of a foam-like material and in that the upper layer is made of paper.

From British patent GB 2,152,875 there is known a carpet underlay for floor covering and a method of manufacturing the same. The carpet underlay comprises a foam layer and a backing layer formed from a creped paper reinforced by weft threads laid in parallel rows on the paper in the direction of the crimp therein. The weft threads are secured to the paper by means of stitches, and the paper is fixed to a foamed rubber layer by means of a layer of glue. This is a relatively complicated carpet underlay.

GB 2.299.293 discloses a carpet underlay and a backing therefore comprising a layer of crepe paper laminated to a layer of non-stretch material such as paper, which backing is attached to the underlay which is preferably formed of a sponge rubber or foam.

GB 2.206.079 discloses a carpet underlay and method of producing this. The carpet underlay comprises successively of a paper substrate, a heat sealable polymer and a foamed layer.

US 4.557.774 discloses a system for holding a carpet and pad in place by adhesion without stretching. The pad or carpet cushion successively comprising a foam pad, a scrim webbing bonded to top and bottom surfaces of the foam pad, with a pressure-sensitive adhesive layer also at top and bottom surfaces on the scrim and on the surfaces of the pad itself, between the mesh of the scrim webbing.

Further preferred embodiments of a carpet underlay are disclosed in the subclaims and will be explained in more detail below.

The invention also relates to a method for laying floor covering by first laying a carpet underlay on the floor, with the nonslip layer facing towards the floor, and applying a layer of glue to the upper layer being substantially impermeable to glue of said underlay, on which the upper carpet is then laid, characterized in that a carpet underlay as described above is used.

A smooth surface is obtained by using the carpet underlay, on which a floor covering can readily be laid, without said floor covering exhibiting any wrinkles and/or curvature. Furthermore it is a known fact that a carpet underlay provides a good distribution of forces and a good thermal insulation and sound insulation.

The above objects are accomplished by using polyurethane foam. Furthermore it is possible to make the carpet underlay relatively soft or relatively hard to the touch by using specific kinds of polyurethane foam having a lower or a higher density.

The use of paper for the upper layer makes it possible to simplify the production process and manufacture the underlay at low cost. The paper is a printed crepe paper, in particular crepe paper of 50-75 g/m², which means that the basic paper has a weight of 50 g/m², and that the paper has a weight of 75 g/m² after creping. It will be apparent that also other known crepe papers may be used, and that the values of 50 g/m² and 75 g/m² are only preferred values, which values increase by 40-60 wt.% per unit area as a result of the creping treatment of the paper.

The paper upper layer may furthermore be self-adhesive on both sides, one side being covered with a protective layer. After the carpet underlay has been laid, the protective layer may be removed, after which a carpet can be laid directly on the self-adhesive layer.

The invention will now be explained in more detail by means of the following example of the manufacture of a carpet underlay, which example must not be construed as being limitative.

### Example.

A thin layer of glue is applied to the upper side of the polyurethane foam underlay core in an amount of 30 g/m², on which a layer of crepe paper is laid, which crepe paper is preferably provided with a print and has a weight of 75 g/m². The original paper had a weight of 50 g/m².

A film of glue is applied to the other side of the core in an amount of 25 g/m², on which a non-woven material is laid, to which a hot melt is applied in an amount of 30 g/m². Thus an underlay having a thickness of 6.5 mm is obtained.

When floor covering is to be laid, the underlay is laid on a floor with the paper facing upwards. Glue is applied to the paper upper layer, and the upper carpet is laid on said layer of glue.

## Claims

1. A carpet underlay for use in the laying of a floor covering, which underlay consists of a core comprising a nonslip layer at the bottom side and an upper layer being impermeable to glue at the upper side, wherein the core is made of a foam-like material and the upper layer is made of paper, said nonslip layer is built up of, starting from the foam-like core, a film of glue, a non-woven material and a hot melt, **characterized in that** said paper is crepe paper and said crepe paper is printed, and **in that** the weight of the paper has been increased by 40-60 wt.% per unit area after the creping treatment.

2. A carpet underlay according to claim 1, **characterized in that** said paper is connected to said foam-like core by means of a layer of glue.

3. A carpet underlay according to claims 1-2, **characterized in that** said foam-like material of the core substantially consists of polyurethane foam.

4. A carpet underlay according to claims 1-3, **characterized in that** said paper upper layer is self-adhesive on both sides, one side being covered with a protective layer.

5. A method of laying a floor covering by first laying a carpet underlay on the floor, with the nonslip layer facing towards the floor, and applying a layer of glue to the upper layer being impermeable to glue of the carpet underlay, on which the upper carpet is then laid, **characterized in that** a carpet underlay as defined in claims 1-4 is used.

## Patentansprüche

1. Teppichunterlage zur Verwendung beim Legen eines Bodenbelags, wobei die Unterlage aus einem Kern mit einer rutschfesten Schicht an der Unterseite und einer gegen Kleber undurchlässigen oberen Schicht an der Oberseite besteht, wobei der Kern aus einem schaumartigen Material und die obere Schicht aus Papier besteht und die rutschfeste Schicht ausgehend von dem schaumartigen Kern aus einer dünnen Kleberschicht, einem nicht gewebten Material und einem Heißschmelzklebstoff aufgebaut ist, **dadurch gekennzeichnet, dass** das Papier Krepppapier ist, das Krepppapier bedruckt ist und das Gewicht des Papiers nach der Behandlung durch Kreppen um 40 bis 60 Gew.-% pro Flächeneinheit erhöht wurde.

2. Teppichunterlage nach Anspruch 1, **dadurch gekennzeichnet, dass** das Papier mittels einer Schicht Kleber mit dem schaumartigen Kern verbunden ist.

3. Teppichunterlage nach den Ansprüchen 1 bis 2, **dadurch gekennzeichnet, dass** das schaumartige Material des Kerns im Wesentlichen aus Polyurethanschaum besteht.

4. Teppichunterlage nach den Ansprüchen 1 bis 3, **dadurch gekennzeichnet, dass** die obere Papierschicht an beiden Seiten selbstklebend ist, wobei eine Seite mit einer Schutzschicht bedeckt ist.

5. Verfahren zum Legen eines Bodenbelags, indem zunächst eine Teppichunterlage auf den Boden gelegt wird, wobei die rutschfeste Schicht dem Boden zugewandt ist, und eine Schicht Kleber auf die gegen Kleber undurchlässige obere Schicht der Teppichunterlage aufgebracht wird, auf die der obere Teppich dann gelegt wird, **dadurch gekennzeichnet, dass** eine Teppichunterlage nach den Ansprüchen 1 bis 4 verwendet wird.

## Revendications

1. Thibaude utilisable pour poser un revêtement de sol, ladite thibaude étant constituée d'une partie centrale comprenant une couche antidérapante au niveau de la face inférieure et une couche supérieure imperméable à la colle au niveau de la face supérieure, dans laquelle la partie centrale est composée d'un matériau de type mousse et la couche supérieure est composée de papier, ladite couche antidérapante est formée, à partir de la partie centrale de type mousse, d'un film de colle, d'un tissu non tissé et d'une matière thermodurcissable,
**caractérisée en ce que** ledit papier est du papier crêpé, ledit papier crêpé étant imprimé, et **en ce que** le poids du papier a été augmenté de 40 % en poids à 60 % en poids par unité de surface après le traitement de crêpage.

2. Thibaude selon la revendication 1, **caractérisée en ce que** ledit papier est connecté à ladite partie centrale de type mousse au moyen d'une couche de colle.

3. Thibaude selon les revendications 1 à 2, **caractérisée en ce que** ledit matériau de type mousse de la partie centrale consiste essentiellement en une mousse de polyuréthane.

4. Thibaude selon les revendications 1 à 3, **caractérisée en ce que** ladite couche supérieure en papier est auto-adhésive sur les deux faces, une face étant recouverte d'une couche protectrice.

5. Procédé de pose d'un revêtement de sol en posant tout d'abord une thibaude sur le sol, avec la couche antidérapante en face du sol, et en appliquant une couche de colle sur la couche supérieure imperméable à la colle de la thibaude, sur laquelle la moquette supérieure est ensuite posée, **caractérisé en ce qu'**une thibaude selon les revendications 1 à 4 est utilisée.
